(19) Europäisches Patentamt
European Patent Office
Office européen des brevets

(11) EP 2 714 790 B1

(12) **FASCICULE DE BREVET EUROPEEN**

(45) Date de publication et mention de la délivrance du brevet:
**08.07.2020 Bulletin 2020/28**

(21) Numéro de dépôt: **12724635.3**

(22) Date de dépôt: **31.05.2012**

(51) Int Cl.:
***C08K 5/21*** *(2006.01)* ***C08K 5/23*** *(2006.01)*
***C08K 5/24*** *(2006.01)* ***C08K 5/28*** *(2006.01)*
***C08L 9/06*** *(2006.01)* ***C08L 21/00*** *(2006.01)*
***B60C 1/00*** *(2006.01)* ***C08J 9/10*** *(2006.01)*

(86) Numéro de dépôt international:
**PCT/EP2012/060219**

(87) Numéro de publication internationale:
**WO 2012/164002 (06.12.2012 Gazette 2012/49)**

(54) **PNEU DONT LA BANDE DE ROULEMENT COMPORTE UNE COMPOSITION DE CAOUTCHOUC THERMO-EXPANSIBLE RÉDUISANT LES BRUITS DE ROULAGE**

LAUFREIFEN AUS EINER THERMISH EXPANDIERBAREN KAUTSCHUKZUSAMMENSETZUNG DIE ABROLLGERÄUSCH VERMINDERT

TIRE TREAD COMPRISING A THERMALLY EXPANDABLE RUBBER COMPOSITION REDUCING ROAD NOICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.06.2011 FR 1154800**

(43) Date de publication de la demande:
**09.04.2014 Bulletin 2014/15**

(73) Titulaire: **Compagnie Générale des Etablissements Michelin**
**63000 Clermont-Ferrand (FR)**

(72) Inventeurs:
- **SHIMANAKA, Nanae**
  **Tokyo 102-8176 (JP)**
- **PAGANO, Salvatore**
  **Tokyo 102-8176 (JP)**

(74) Mandataire: **Regimbeau**
**20, rue de Chazelles**
**75847 Paris Cedex 17 (FR)**

(56) Documents cités:
**EP-A1- 2 039 531** **FR-A1- 2 952 645**
**US-A1- 2003 119 927** **US-A1- 2010 132 861**

EP 2 714 790 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### 1. DOMAINE DE L'INVENTION

L'invention est relative aux pneus pour véhicules automobiles ainsi qu'aux compositions de caoutchouc utilisables pour la fabrication de tels pneus.

Elle est plus particulièrement relative aux pneus dont la bande de roulement comporte une composition de caoutchouc mousse, à l'état vulcanisé, destinée à réduire le bruit émis par ces pneus lors du roulage des véhicules.

### 2. ETAT DE LA TECHNIQUE

Il est connu (voir par exemple demande de brevet WO 2010/069510) que le bruit émis par un pneu en roulage a pour origine entre autres les vibrations de sa structure consécutives au contact du pneu avec les irrégularités de la chaussée, provoquant également une génération d'ondes acoustiques diverses. Le tout se manifeste finalement sous forme de bruit, tant a l'intérieur qu'à l'extérieur du véhicule. L'amplitude des ces différentes manifestations est tributaire des modes de vibrations propres du pneu mais également de la nature du revêtement sur lequel le véhicule se déplace. La gamme de fréquences correspondant au bruit généré par les pneus s'étend typiquement de 20 à 4 000 Hz environ.

En ce qui concerne le bruit perçu à l'intérieur du véhicule, deux modes de propagation du son coexistent :

- les vibrations sont transmises par le centre roue, le système de suspension, la transmission pour finalement générer du bruit dans l'habitacle ; on parle alors de transmission par voie solidienne, généralement dominante pour les basses fréquences du spectre (jusqu'à environ 400 Hz) ;
- les ondes acoustiques émises par le pneu sont directement propagées par voie aérienne à l'intérieur du véhicule, ce dernier faisant office de filtre ; on parle alors de transmission par voie aérienne, qui domine généralement dans les hautes fréquences (environ 600 Hz et au delà).

Le bruit dit *"road noise"* fait plutôt référence au niveau global perçu dans le véhicule et dans une gamme de fréquence allant jusqu'à 2000 Hz. Le bruit dit "de cavité" fait référence à la gêne due à la résonance de la cavité de gonflage de l'enveloppe du pneu.

En ce qui concerne le bruit émis à l'extérieur du véhicule, sont pertinentes les diverses interactions entre le pneu et le revêtement routier, le pneu et l'air, qui vont occasionner une gêne auprès des riverains du véhicule lorsque ce dernier roule sur une chaussée. On distingue également dans ce cas plusieurs sources de bruit telles que le bruit dit "d'indentation" du à l'impact des rugosités de la route dans l'aire de contact, le bruit dit "de friction" essentiellement généré en sortie de l'aire de contact, le bruit "dit de sculpture" du à l'arrangement des éléments de sculpture et à la résonance dans les différents sillons. La gamme de fréquences concernées correspond ici typiquement à une plage allant de 300 à 3 000 Hz environ.

La demande de brevet EP 2 039 531 décrit une composition de caoutchouc destinée à être utilisée en tant qu'une couche située entre la bande de roulement supérieure (tread cap) et bande de roulement inférieure (tread base) et utilisée sous forme d'une mousse comprenant un mélange d'un caoutchouc styrène-butadiène SBR, présent en quantité majoritaire et ayant une Tg de -37°C et d'un polybutadiene, de plus de 50 pce de noir de carbone, de 24 pce d'un plastifiant et de 2,5 à 10 pce d'un agent d'expansion.

La demande de brevet US 2010/0132861 divulgue une composition de caoutchouc sous forme de mousse utilisée en tant que bande de roulement de pneumatique comprenant 100 parties en poids d'au moins un élastomère diénique, de 20 à 150 pce de charge renforçante telle que le noir de carbone, de 0 à 20 pce de silice et un agent d'expansion tel que le bicarbonate de sodium ou le p,p-oxybis(benzènesulfonylhydrazide).

La demande de brevet US 2003/0119927 décrit une composition de caoutchouc sous forme de mousse destinée à la préparation de bande de roulement comprenant 100 parties en poids d'un élastomère diénique, 55 pce d'une charge renforçante et 2 à 10 pce d'un agent d'expansion.

La demande de brevet FR 2 952 645 divulgue une composition pour paroi interne d'un pneumatique comportant une composition élastomère à base d'au moins un élastomère te 1 que le caoutchouc naturel ou le caoutchouc butyl, une charge renforçante (silice et/ou noir de carbone), entre 10 et 80 pce d'un agent d'expansion tel qu'un composé azodicarbonamide et entre 10 et 50 pce d'un composé thermo fusible dont la température de fusion est comprise entre 70 °C et 150 °C, par exemple de l'urée.

### 3. BREVE DESCRIPTION DE L'INVENTION

Or, les Demanderesses ont découvert lors de leurs recherches une composition de caoutchouc spécifique qui, incorporée à la bande de roulement des pneus, possède des propriétés de barrière au son améliorées dans une plage

de fréquence située entre 300 et 2000 Hz, et qui est donc susceptible de contribuer à réduire les bruits émis tant à l'intérieur qu'à l'extérieur des véhicules lors du roulage de leurs pneus.

En conséquence, la présente invention concerne un pneu dont la bande de roulement comporte, à l'état non vulcanisé, une composition de caoutchouc thermo-expansible comportant au moins :

- 50 à 100 pce d'un copolymère à base de styrène et de butadiène ;
- optionnellement, 0 à 50 pce d'un autre élastomère diénique ;
- plus de 50 pce d'une charge renforçante ;
- entre 5 et 25 pce d'un agent d'expansion ;
- entre 5 et 25 pce d'un composé thermofusible dont la température de fusion est comprise entre 70°C et 150°C ;
- la teneur totale en agent d'expansion et composé thermofusible étant supérieure à 15 pce.

L'invention concerne également un pneu à l'état vulcanisé obtenu après cuisson (vulcanisation) du pneu cru conforme à l'invention tel que décrit ci-dessus.

Les pneus de l'invention sont particulièrement destinés à équiper des véhicules à moteur de type tourisme, incluant les véhicules 4x4 (à quatre roues motrices) et véhicules SUV (*"Sport Utility Vehicles"*), des véhicules deux roues (notamment motos) comme des véhicules industriels choisis en particulier parmi camionnettes et "poids-lourd" (i.e., métro, bus, engins de transport routier tels que camions, tracteurs).

L'invention ainsi que ses avantages seront aisément compris à la lumière de la description et des exemples de réalisation qui suivent.

## **4.** DESCRIPTION DETAILLEE DE L'INVENTION

Dans la présente description, sauf indication expresse différente, tous les pourcentages (%) indiqués sont des pourcentages en masse.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Le pneu de l'invention a donc pour caractéristique essentielle que sa bande de roulement à l'état non vulcanisé, tout au moins pour sa portion (partie radialement la plus externe) destinée à entrer directement en contact avec la surface de la route, comporte une composition de caoutchouc thermo-expansible comportant au moins :

- 50 à 100 pce d'un (au moins un, c'est-à-dire un ou plusieurs) copolymère à base de styrène et de butadiène ;
- optionnellement, 0 à 50 pce d'un (au moins un, c'est-à-dire un ou plusieurs) autre élastomère diénique ;
- plus de 50 pce d'une (au moins une, c'est-à-dire une ou plusieurs) charge renforçante ;
- entre 5 et 25 pce d'un (au moins un, c'est-à-dire un ou plusieurs) agent d'expansion ;
- entre 5 et 25 pce d'un (au moins un, c'est-à-dire un ou plusieurs) composé thermofusible dont la température de fusion est comprise entre 70°C et 150°C ;
- la teneur totale en agent d'expansion et composé thermofusible étant supérieure à 15 pce.

Les différents composants ci-dessus sont décrits en détail ci-après.

### 4.1. Copolymère à base de styrène et de butadiène

La composition de caoutchouc thermo-expansible a pour première caractéristique essentielle de comporter 50 à 100 pce d'un copolymère à base de styrène et de butadiène, c'est-à-dire d'un copolymère d'au moins un monomère styrène et d'au moins un monomère butadiène ; en d'autres termes, ledit copolymère à base de styrène et de butadiène comporte par définition au moins des unités issues de styrène et des unités issues de butadiène.

Préférentiellement, le taux dudit copolymère, dans la composition de caoutchouc thermo-expansible, est compris dans un domaine de 50 à 90 pce, plus préférentiellement dans un domaine de 60 à 85 pce.

A titre de monomères butadiène conviennent notamment le butadiène-1,3, le 2-méthyl-1,3-butadiène, les 2,3-

di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène. A titre de monomères styrène conviennent notamment le styrène, les méthylstyrènes, le para-tertiobutylstyrène, les méthoxystyrènes, les chlorostyrènes.

Ledit copolymère à base de styrène et de butadiène peut avoir toute microstructure qui est fonction des conditions de polymérisation utilisées, notamment de la présence ou non d'un agent modifiant et/ou randomisant et des quantités d'agent modifiant et/ou randomisant employées. Il peut être par exemple à blocs, statistique, séquencé, microséquencé, et être préparé en dispersion ou en solution ; il peut être couplé et/ou étoilé ou encore fonctionnalisé avec un agent de couplage et/ou d'étoilage ou de fonctionnalisation.

De préférence, le copolymère à base de styrène et de butadiène est choisi dans le groupe constitué par les copolymères styrène-butadiène (en abrégé SBR), les copolymères styrène-butadiène-isoprène (en abrégé SBIR) et les mélanges de tels copolymères.

Parmi les copolymères SBIR, on peut citer notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%.

Plus préférentiellement, on utilise un copolymère SBR. Parmi les copolymères SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

La Tg du copolymère à base de styrène et de butadiène est de préférence supérieure à -40°C, plus préférentiellement supérieure à -35°C, en particulier comprise entre -30°C et +30°C (plus particulièrement comprise dans un domaine de -25°C à +25°C).

La Tg des élastomères ici décrits est mesurée de manière conventionnelle, bien connue de l'homme du métier, sur un élastomère à l'état sec (i.e., sans huile d'extension) et par DSC (par exemple selon ASTM D3418-1999).

L'homme du métier sait comment modifier la microstructure d'un copolymère à base de styrène et de butadiène, en particulier d'un SBR, pour augmenter et ajuster sa Tg, notamment en jouant sur les teneurs en styrène, en liaisons -1,2 ou encore en liaisons trans-1,4 de la partie butadiénique. On utilise plus préférentiellement un SBR (solution ou émulsion) ayant une teneur en styrène (% molaire) qui est supérieure à 35%, plus préférentiellement comprise entre 35% et 60%, en particulier dans un domaine de 38% à 50%. Des SBR à haute Tg sont bien connus de l'homme du métier, ils ont été essentiellement utilisés dans des bandes de roulement de pneus pour améliorer certaines de leurs propriétés d'usage.

Au copolymère à base de styrène et de butadiène ci-dessus, peut être associé au moins un autre (dit aussi second) élastomère diénique, différent dudit copolymère (c'est-à-dire ne comportant pas des unités issues de styrène et de butadiène), ledit second élastomère diénique étant présent à un taux pondéral qui est en conséquence au plus égal à 50 pce.

Ce second élastomère diénique éventuel est préférentiellement choisi dans le groupe constitué par les caoutchoucs naturels (NR), les polyisoprènes de synthèse (IR), les polybutadiènes (BR), les copolymères d'isoprène et les mélanges de ces élastomères. De tels copolymères sont plus préférentiellement choisis dans le groupe constitué par les copolymères d'isoprène-butadiène (BIR) et les copolymères d'isoprène-styrène (SIR).

Parmi ces derniers, conviennent notamment les homopolymères polybutadiène (BR) et en particulier ceux ayant une teneur (% molaire) en unités -1,2 comprise entre 4% et 80% ou ceux ayant une teneur (% molaire) en cis-1,4 supérieure à 80% ; les homopolymères polyisoprène (IR) ; les copolymères de butadiène-isoprène (BIR) et notamment ceux ayant une teneur en isoprène comprise entre 5% et 90% en poids et une Tg de - 40°C à - 80°C ; les copolymères isoprène-styrène (SIR) et notamment ceux ayant une teneur en styrène comprise entre 5% et 50% en poids et une Tg comprise entre - 25°C et - 50°C.

Selon un mode de réalisation préférentiel, le second élastomère diénique est un élastomère isoprénique, plus préférentiellement du caoutchouc naturel ou un polyisoprène de synthèse du type cis-1,4 ; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation préférentiel, le second élastomère diénique est un polybutadiène, de préférence un polybutadiène ayant un taux de liaisons cis-1,4 supérieur à 90%.

Selon un autre mode de réalisation préférentiel, le second élastomère diénique est un mélange de polybutadiène avec un élastomère isoprénique (caoutchouc naturel ou polyisoprène de synthèse).

Plus préférentiellement, le taux de second élastomère diénique, en particulier de polybutadiène et/ou d'élastomère isoprénique (notamment caoutchouc naturel), est compris dans un domaine de 10 à 50 pce, plus préférentiellement encore dans un domaine de 15 à 40 pce.

Aux élastomères diéniques précédemment décrits pourraient être également associés, en quantité minoritaire, des élastomères synthétiques autres que diéniques, voire des polymères autres que des élastomères, par exemple des polymères thermoplastiques.

4.2. Charge

Toute charge connue pour ses capacités à renforcer une composition de caoutchouc est utilisable, par exemple une charge organique telle que du noir de carbone, ou encore une charge inorganique telle que de la silice à laquelle est associé de manière connue un agent de couplage.

Une telle charge consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est compris entre 50 et 150 pce. Une teneur supérieure à 50 pce est favorable à une bonne tenue mécanique ; au-delà de 150 pce, il existe un risque de rigidité excessive de la composition de caoutchouc. Pour ces raisons, le taux de charge renforçante totale est plus préférentiellement compris dans un domaine de 70 à 120 pce.

Comme noirs de carbone conviennent par exemple tous les noirs de carbone qui sont conventionnellement utilisés dans les pneus (noirs dits de grade pneu) tels que les noirs des séries 100, 200, 300 (grades ASTM), comme par exemple les noirs N115, N134, N234, N326, N330, N339, N347, N375. Les noirs de carbone pourraient être par exemple déjà incorporés à l'élastomère diénique, notamment isoprénique, sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de pneus, en d'autres termes apte à remplacer, dans sa fonction de renforcement, un noir de carbone conventionnel de grade pneu ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber.

Selon un autre mode de réalisation particulièrement préférentiel, on utilise comme charge majoritaire une charge inorganique renforçante, en particulier de la silice, à un taux compris dans un domaine de 70 à 120 pce, charge inorganique renforçante à laquelle peut être ajoutée avantageusement du noir de carbone à un taux minoritaire au plus égal à 15 pce, en particulier compris dans un domaine de 1 à 10 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO3/002649 (ou US 2005/016650).

Conviennent en particulier, sans que la définition ci-après soit limitative, des silanes polysulfurés répondant à la formule générale (I) suivante:

(I) $Z - A - S_x - A - Z$ , dans laquelle:

- x est un entier de 2 à 8 (de préférence de 2 à 5) ;

- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

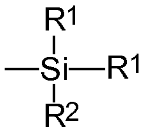 ; 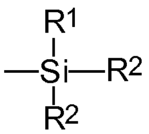 ; 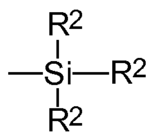 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO 2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Lorsqu'elles sont renforcées par une charge inorganique telle que silice, les compositions en caoutchouc comportent préférentiellement entre 2 et 15 pce, plus préférentiellement entre 3 et 12 pce d'agent de couplage.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

4.3. Agent d'expansion et composé thermofusible associé

De manière connue, un agent d'expansion (« *blowing agent* » en anglais) est un composé décomposable thermiquement, destiné à libérer lors d'une activation thermique, par exemple lors de la vulcanisation du pneu, une quantité de gaz importante et ainsi conduire à la formation de bulles. La libération de gaz dans la composition de caoutchouc provient donc de cette décomposition thermique de l'agent d'expansion. Dans la plupart des cas, le gaz

formé est de l'azote mais il arrive aussi, suivant la nature de l'agent d'expansion utilisé, que ce gaz contienne du dioxyde de carbone.

Il existe des agents d'expansion physiques ou chimiques, du type endothermiques ou exothermiques. On utilise préférentiellement des agents d'expansion chimiques, plus préférentiellement des agents d'expansion chimiques du type exothermiques.

Parmi les agents d'expansion utilisables préférentiellement, on citera notamment ceux choisis dans le groupe constitué par les composés azo, nitroso, hydrazines, carbazides, semi-carbazides, tétrazoles, carbonates, citrates et les mélanges de tels composés.

Ces agents d'expansion sont plus préférentiellement choisis dans le groupe constitué par les composés diazo, dinitroso, sulfonyl semicarbazides, sulfonyl hydrazides et les mélanges de tels composés. Parmi ces derniers, on peut citer plus particulièrement le dinitroso-pentane-éthylène tétramine, le dinitroso-pentane-styrène tétramine, l'azodicarbonamide, le N,N'-diméthyl-N,N'-dinitroso-phtalamide, le benzène sulfonyl-hydrazide, le toluène sulfonyl-hydrazide, le p,p'-oxy-bis-(benzène sulfonyl) hydrazide, le p-toluène sulfonyl semicarbazide ou encore le p,p'-oxy-bis-(benzènesulfonyl) semicarbazide ; dans ces exemples, le gaz formé est composé d'un mélange d'azote et de dioxyde de carbone.

Parmi les agents d'expansion ne dégageant que du dioxyde de carbone on peut citer par exemple les composés suivants : carbonates et bicarbonates de métaux alcalins ou alcalino-terreux tels que carbonate ou bicarbonate de sodium, carbonate ou bicarbonate d'ammonium, citrates tels que monocitrate de sodium, acide malonique, acide citrique.

Préférentiellement, le taux d'agent d'expansion est compris entre 8 et 20 pce.

Une caractéristique essentielle de l'invention est d'ajouter à l'agent d'expansion précédemment décrit un composé thermofusible dont la température de fusion est comprise entre 70°C et 150°C, de préférence entre 100°C et 150°C, plus préférentiellement entre 110°C et 140°C. La température de fusion est une constante physique de base bien connue (disponible par exemple dans *"Handbook of Chemistry and Physics"*) des composés thermofusibles, organiques ou inorganiques ; elle pourra être contrôlée par toute méthode connue, par exemple par la méthode de Thiele, la méthode du banc de Köfler ou encore par analyse DSC.

Le taux de ce composé thermofusible est préférentiellement compris entre 8 et 20 pce. Il a pour fonction de se transformer en liquide dans le domaine de température spécifique indiqué ci-dessus, avant que ou au moment où l'agent d'expansion se décompose thermiquement et libère des bulles de gaz.

Tout composé présentant une température de fusion comprise entre 70°C et 150°C, de préférence entre 100 et 150°C, plus préférentiellement entre 110°C et 140°C, est susceptible de convenir. On pourra utiliser notamment les additifs de caoutchouterie connus de l'homme du métier comme étant compatibles, tant sous leur forme (par exemple sous forme de poudre) que par leur nature chimique, avec des compositions de caoutchouc usuelles pour pneus.

A titre d'exemple, on peut citer notamment des polymères thermoplastiques telles que polyéthylène ou polypropylène.

On peut également citer comme exemples des résines hydrocarbonées thermoplastiques à haute température de transition vitreuse (Tg), dont la température de fusion (ou ce qui est ici considéré comme équivalent, la température de ramollissement mesurée par exemple selon le méthode connue *"Ring and Ball"* - norme ISO 4625) est comprise entre 70°C et 150°C, de préférence entre 100 et 150°C, plus préférentiellement entre 110°C et 140°C.

La dénomination "résine" est réservée dans la présente demande, par définition connue de l'homme du métier, à un composé qui est solide à température ambiante (23°C), par opposition à un composé plastifiant liquide tel qu'une huile.

Ces résines hydrocarbonées sont des polymères bien connus de l'homme du métier, essentiellement à base de carbone et hydrogène, utilisables en particulier comme agents plastifiants ou agents tackifiants dans des matrices polymériques. Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). De telles résines hydrocarbonées thermoplastiques peuvent être choisies par exemple dans le groupe constitué par les résines d'homopolymère ou copolymère de cyclopentadiène, les résines d'homopolymère ou copolymère de dicyclopentadiène, les résines d'homopolymère ou copolymère terpène, les résines d'homopolymères ou copolymères terpène phénol, les résines d'homopolymère ou copolymère de coupe C5, les résines d'homopolymère ou copolymère de coupe C9, les résines d'homopolymères ou copolymères d'alpha-méthyl-styrène et les mélanges de ces résines.

Selon un mode de réalisation particulièrement préférentiel, le composé thermofusible choisi est l'urée ou un dérivé thermofusible de l'urée. L'urée en particulier possède une température de fusion qui est bien adaptée à l'application visée.

Une caractéristique essentielle de l'invention, pour la réduction visée des bruits de roulage, est que la quantité totale d'agent d'expansion et de composé thermofusible soit supérieure à 15 pce, de préférence comprise entre 15 et 40 pce. Cette quantité totale est plus préférentiellement supérieure à 20 pce, en particulier comprise entre 20 et 40 pce, plus particulièrement comprise entre 20 et 35 pce.

4.4. Additifs divers

La composition de caoutchouc thermo-expansible peut comporter également tout ou partie des additifs usuels habituellement utilisés dans les compositions de caoutchouc pour bandes de roulement de pneus, comme par exemple des agents de protection tels que cires anti-ozone, anti-ozonants chimiques, anti-oxydants, des agents plastifiants, un système de réticulation à base soit de soufre, soit de donneurs de soufre et/ou de peroxyde et/ou de bismaléimides, des accélérateurs de vulcanisation, des activateurs de vulcanisation.

Selon un mode de réalisation préférentiel, la composition de caoutchouc thermo-expansible comporte également un agent plastifiant liquide (à 20°C) dont la fonction est de ramollir la matrice en diluant l'élastomère diénique et la charge renforçante ; sa Tg (température de transition vitreuse) est par définition inférieure à -20°C, de préférence inférieure à -40°C.

Plus préférentiellement, pour une performance optimale de la bande de roulement du pneu de l'invention, ce plastifiant liquide est utilisé à un taux relativement réduit, tel que le rapport pondéral charge renforçante sur agent plastifiant liquide soit supérieur à 2,0, plus préférentiellement supérieur à 2,5, en particulier supérieur à 3,0.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les plastifiants liquides choisis dans le groupe constitué par les huiles naphténiques (à basse ou haute viscosité, notamment hydrogénées ou non), les huiles paraffiniques, les huiles MES (*Medium Extracted Solvates*), les huiles DAE (*Distillate Aromatic Extracts*), les huiles TDAE (*Treated Distillate Aromatic Extracts*), les huiles RAE (*Residual Aromatic Extracts*), les huiles TRAE (*Treated Residual Aromatic Extracts*), les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneus.

Selon un autre mode de réalisation préférentiel, la composition de caoutchouc de l'invention peut comporter aussi, à titre de plastifiant solide (à 23°C), une résine hydrocarbonée présentant une Tg supérieur à +20°C, de préférence supérieure à +30°C, telle que décrite par exemple dans les demandes WO 2005/087859, WO 2006/061064 ou WO 2007/017060.

Les résines hydrocarbonées sont des polymères bien connus de l'homme du métier, essentiellement à base de carbone et hydrogène, miscibles donc par nature dans les compositions d'élastomère(s) diénique(s) lorsqu'elles sont qualifiées en outre de "plastifiantes". Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :

- une Tg supérieure à 20°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw masse moléculaire moyenne en poids).

La Tg de cette résine est mesurée de manière connue par DSC (*Differential Scanning Calorimetry*), selon la

norme ASTM D3418. La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 μm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$). De préférence, le composé vinyle-aromatique est du styrène ou un monomère vinylaromatique issu d'une coupe $C_9$ (ou plus généralement d'une coupe $C_8$ à $C_{10}$). De préférence, le composé vinylaromatique est le monomère minoritaire, exprimé en fraction molaire, dans le copolymère considéré.

Le taux de résine hydrocarbonée est préférentiellement compris entre 3 et 60 pce, plus préférentiellement entre 3 et 40 pce, notamment entre 5 et 30 pce.

Dans le cas où l'on souhaite augmenter la rigidité de la bande de roulement une fois expansée, sans réduire pour autant la teneur en plastifiant liquide ci-dessus, on pourra avantageusement incorporer des résines renforçantes (e.g. accepteurs et donneurs de méthylène) tels que décrites par exemple dans WO 02/10269 ou US 7,199,175.

La composition de caoutchouc thermo-expansible peut également contenir des activateurs de couplage lorsque qu'un agent de couplage est utilisé, des agents de recouvrement de la charge inorganique lorsqu'une charge inorganique est utilisée, ou plus généralement des agents d'aide à la mise en œuvre (processabilité) susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

4.5. Fabrication des compositions

Les compositions de caoutchouc sont fabriquées dans des mélangeurs appropriés, en utilisant par exemple trois phases de préparation successives selon une procédure générale connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase (non-productive) à plus basse température (de préférence inférieure à 100°C) au cours de laquelle est incorporé l'agent d'expansion, enfin une troisième phase de travail mécanique (parfois qualifiée de phase "productive") à basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions de caoutchouc comporte par exemple et de préférence les étapes suivantes :

- incorporer dans un mélangeur, à l'élastomère ou au mélange d'élastomères, au moins la charge et le composé thermofusible en malaxant thermomécaniquement le tout, en une ou plusieurs fois, jusqu'à atteindre une température maximale comprise entre 130°C et 200°C ;
- refroidir l'ensemble à une température inférieure à 100°C ;
- puis incorporer l'agent d'expansion au mélange ainsi obtenu et refroidi, en malaxant thermomécaniquement le tout jusqu'à atteindre une température maximale inférieure à 100 C ;
- incorporer ensuite un système de réticulation ;

- malaxer le tout jusqu'à une température maximale inférieure à 120°C ;
- extruder ou calandrer la composition de caoutchouc ainsi obtenue.

A titre d'exemple, on introduit au cours de la première phase non-productive, dans un mélangeur approprié tel qu'un mélangeur interne usuel, tous les constituants nécessaires, les éventuels agents de recouvrement ou de mise en œuvre complémentaires et autres additifs divers, à l'exception de l'agent d'expansion et du système de réticulation. Après travail thermomécanique, tombée et refroidissement du mélange ainsi obtenu, on conduit alors une seconde phase (non-productive) de travail thermomécanique dans le même mélangeur interne, phase au cours de laquelle est incorporé l'agent d'expansion à une température plus modérée (par exemple 60°C), pour atteindre une température maximale de tombée inférieure à 100°C. On incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore calandrée ou extrudée sous la forme d'une bande de roulement thermo-expansible.

A l'état cru (i.e., non vulcanisé) et donc non expansé, la densité ou masse volumique notée $D_1$ de la composition de caoutchouc thermo-expansible est de préférence comprise entre 1,100 et 1,400 g/cm$^3$, plus préférentiellement comprise dans un domaine de 1,150 à 1,350 g/cm$^3$.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

C'est au cours de cette étape de vulcanisation que l'agent d'expansion va libérer une quantité de gaz importante, conduire à la formation de bulles dans la composition de caoutchouc mousse et finalement à son expansion.

A l'état cuit (i.e., vulcanisé), la densité notée $D_2$ de la composition de caoutchouc une fois expansée (i.e., à l'état de caoutchouc mousse) est comprise de préférence entre 0,500 et 1,000 g/cm$^3$, plus préférentiellement comprise dans un domaine de 0,600 à 0,850 g/cm$^3$.

Son taux d'expansion volumique noté $T_E$ (exprimé en %) est de préférence compris entre 30% et 150%, plus préférentiellement dans un domaine de 50 à 120%, ce taux d'expansion $T_E$ étant calculé de manière connue à partir des densités $D_1$ et $D_2$ ci-dessus, comme suit :

$$T_E = [(D_1/D_2) - 1] \text{ x } 100.$$

Préférentiellement, sa dureté Shore A (mesurée conformément à la norme ASTM D 2240-86) est comprise dans un domaine de 50 à 70.

## 5. EXEMPLES DE REALISATION DE L'INVENTION

La composition de caoutchouc thermo-expansible précédemment décrite est avantageusement utilisable dans les bandes de roulement, tout au moins pour leur portion qui est destinée à entrer directement en contact avec la surface de la route, de pneus pour tout type de véhicule, en particulier dans les pneus pour véhicules tourisme, comme démontré dans les essais qui suivent.

Pour les besoins de ces essais, deux compositions de caoutchouc (notées C-0 et C-1) ont été préparées dont la formulation est donnée dans le tableau 1 (taux des différents produits exprimé en pce). La composition C-0 est la

composition témoin. La composition C-1 est celle conforme à l'invention, comportant en outre l'agent d'expansion et le composé thermofusible ; son taux de plastifiant (résine plastifiante) a été diminué avec comme objectif de maintenir la rigidité après cuisson à un niveau équivalent à celui de la composition témoin C-0 (dureté Shore A visée égale à environ 57).

Pour la fabrication de ces compositions, on a procédé de la manière suivante: on a introduit dans un mélangeur interne, dont la température initiale de cuve était d'environ 60°C, successivement la charge renforçante, l'élastomère diénique (coupage SBR et BR), le composé thermofusible (urée) pour la composition C-1, ainsi que les divers autres ingrédients à l'exception du système de vulcanisation et de l'agent d'expansion ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" d'environ 150°C. On a ensuite refroidi le mélange ainsi obtenu à une température inférieure à 100°C, réintroduit le mélange refroidi dans le même mélangeur interne (température initiale 60°C), puis pour la composition C-1 incorporé l'agent d'expansion (composé diazo) audit mélange (mélangeur rempli à environ 70% en volume). On a conduit alors un second travail thermomécanique (phase non-productive) en une étape d'environ 2 à 4 min, jusqu'à atteindre une température maximale de tombée inférieure à 100°C. On a récupéré le mélange ainsi obtenu, on l'a refroidi puis on a incorporé un accélérateur type sulfénamide et du soufre sur un mélangeur externe (homo-finisseur) à 30°C, en mélangeant le tout (phase productive) pendant quelques minutes.

Les compositions C-0 et C-1 ainsi préparées ont été ensuite utilisées comme bandes de roulement de pneus tourisme à carcasse radiale, notés respectivement P-0 (pneus témoins) et P-1 (pneus conformes à l'invention), de dimensions 155/65 R14, conventionnellement fabriqués et en tous points identiques, hormis les compositions de caoutchouc constitutives de leur bande de roulement.

Le tableau 2 indique les propriétés mesurées avant et après cuisson : la bande de roulement du pneu conforme à l'invention présente après cuisson, une fois à l'état de caoutchouc mousse (i.e., expansée), une densité nettement réduite correspondant à un taux d'expansion volumique particulièrement élevé, d'environ 70%.

Pour caractériser ensuite les propriétés de réduction du bruit des bandes de roulement respectives, on a conduit un test de roulage des pneus, dans lequel on a évalué le niveau sonore émis en mesurant le niveau de pression acoustique, lors d'un roulage du véhicule à une vitesse de 60 km/h, grâce à plusieurs microphones disposés à l'intérieur du véhicule (*"road noise"*). Le véhicule utilisé était un véhicule de marque « Subaru » (modèle « R1 ») ; le revêtement de la chaussée utilisée pour ce test correspond à un asphalte semi rugueux ; lors du passage dans l'aire de mesure, l'enregistrement de la pression acoustique est déclenché.

Les résultats du tableau 3 expriment les différences de niveau sonore enregistré entre d'une part le pneu P-1 conforme à l'invention et le pneu témoin noté P-0, dans un domaine de fréquences de 300 à 1 900 Hz. Ces différences sont exprimées en énergie acoustique (dB(A)) qui correspond à l'intégration de la pression acoustique en fonction de la fréquence sur les domaines de fréquences considérés, une valeur négative indiquant une réduction du bruit par rapport à la référence.

A la lecture du tableau 3, on constate qu'une réduction de bruit tout à fait significative pour l'homme du métier est obtenue sur le pneu conforme à l'invention, grâce à la composition de caoutchouc mousse spécifique constituant sa bande de roulement.

**Tableau 1**

| Composition N°: | C-0 | C-1 |
|---|---|---|
| SBR (1) | 70 | 70 |
| BR (2) | 30 | 30 |
| silice (3) | 80 | 80 |
| agent de couplage (4) | 6.4 | 6.4 |
| noir de carbone (5) | 5 | 5 |
| agent d'expansion (6) | - | 10 |
| composé thermofusible (7) | - | 10 |
| plastifiant liquide (8) | 15 | 15 |
| résine plastifiante (9) | 20 | 10 |
| DPG (10) | 1.5 | 1.5 |
| ZnO | 1.2 | 1.2 |
| acide stéarique | 2 | 2 |
| cire anti-ozone | 1.5 | 1.5 |
| antioxydant (11) | 2 | 2 |
| soufre | 1.2 | 1.2 |

(suite)

| Composition N°: | C-0 | C-1 |
|---|---|---|
| accélérateur (12) | 1.8 | 1.8 |

(1) SBR avec 26% de motif styrène et 74% de motifs butadiène (21% de -1,4 trans, 21% de -1,4 cis et 58% de -1,2) ; Tg = -25°C ;
(2) BR avec 0,3% de 1-2 ; 2,7% de trans ; 97% de cis 1-4 (Tg = -104°C) ;
(3) silice « Ultrasil 7000 » de la société Degussa, type "HDS" (BET et CTAB : environ 160 $m^2/g$);
(4) agent de couplage TESPT (« Si69 » de la société Degussa) ;
(5) grade ASTM N234 (société Cabot) ;
(6) azodicarbonamide (« Cellmic C-22 » de la société Sankyo Kasei) ;
(7) urée (société Mitsui Chemical) ;
(8) huile MES (« Catenex SNR » société Shell)
(9) résine C5/C9 (« Escorez ECR-373 » de la société Exxon) ;
(10) diphénylguanidine (« Perkacit DPG » de la société Flexsys) ;
(11) N-1,3-diméthylbutyl-N-phénylparaphénylènediamine (« Santoflex 6-PPD » de la société Flexsys);
(12) N-dicyclohexyl-2-benzothiazol-sulfénamide (« Santocure CBS » de la société Flexsys).

**Tableau 2**

| Composition testée : | C-0 | C-1 |
|---|---|---|
| Densité avant cuisson du pneu | 1.17 | 1.18 |
| Densité après cuisson du pneu | 1.17 | 0.70 |
| Taux d'expansion volumique (%) | 0 | 70 |

**Tableau 3**

| Domaine (Hz) | 300-700 | 700-1100 | 1100-1500 | 1500-1900 |
|---|---|---|---|---|
| dB(A) (*) | -0.9 | -2.9 | -3.3 | -3.4 |
| (*) différence entre pneu de l'invention et pneu témoin, à l'intérieur du véhicule | | | | |

**Revendications**

1. Pneu dont la bande de roulement comporte, à l'état non vulcanisé, une composition de caoutchouc thermo-expansible comportant au moins :

   - 50 à 100 pce d'un copolymère à base de styrène et de butadiène ;
   - optionnellement, 0 à 50 pce d'un autre élastomère diénique ;
   - plus de 50 pce d'une charge renforçante ;
   - entre 5 et 25 pce d'un agent d'expansion ;
   - entre 5 et 25 pce d'un composé thermofusible dont la température de fusion est comprise entre 70°C et 150°C ;
   - la teneur totale en agent d'expansion et composé thermofusible étant supérieure à 15 pce.

2. Pneu selon la revendication 1, dans lequel le copolymère à base de styrène et de butadiène est choisi dans le groupe constitué par les copolymères styrène-butadiène, les copolymères styrène-butadiène-isoprène et les mélanges de tels copolymères, de préférence est un copolymère styrène-butadiène.

3. Pneu selon l'une quelconque des revendications 1 à 2, dans lequel le copolymère à base de styrène et de butadiène présente une température de transition vitreuse qui est supérieure à -40°C, de préférence comprise dans un domaine de -30°C à +30°C.

4. Pneu selon l'une quelconque des revendications 1 à 3, dans lequel l'autre élastomère diénique est choisi dans le

groupe constitué par le caoutchouc naturel, les polyisoprènes de synthèse, les polybutadiènes, les copolymères de butadiène, les copolymères d'isoprène et les mélanges de ces élastomères.

**5.** Pneu selon l'une quelconque des revendications 1 à 4, dans lequel le taux de charge renforçante est compris entre 50 et 150 pce, de préférence compris dans un domaine de 70 à 120 pce.

**6.** Pneu selon l'une quelconque des revendications 1 à 5, dans lequel la composition de caoutchouc comporte en outre un agent plastifiant liquide à 20°C, à un taux tel que le rapport pondéral charge renforçante sur agent plastifiant liquide est supérieur à 2,0, de préférence supérieur à 2,5.

**7.** Pneu selon l'une quelconque des revendications 1 à 6, dans lequel l'agent d'expansion est choisi dans le groupe constitué par les composés azo, nitroso, hydrazines, carbazides, semi-carbazides, tétrazoles, carbonates, citrates et les mélanges de tels composés, de préférence dans le groupe constitué par les composés diazo, dinitroso, sulfonyl semicarbazides, sulfonyl hydrazides et les mélanges de tels composés.

**8.** Pneu selon la revendication 7, dans lequel l'agent d'expansion est un composé azodicarbonamide.

**9.** Pneu selon l'une quelconque des revendications 1 à 8, dans lequel le taux d'agent d'expansion est compris entre 8 et 20 pce.

**10.** Pneu selon l'une quelconque des revendications 1 à 9, dans lequel le taux de composé thermofusible est compris entre 8 et 20 pce.

**11.** Pneu selon l'une quelconque des revendications 1 à 10, dans lequel la quantité totale d'agent d'expansion et de composé thermofusible est supérieure à 20 pce, de préférence comprise entre 20 et 40 pce.

**12.** Pneu selon l'une quelconque des revendications 1 à 11, dans lequel la température de fusion du composé thermofusible est comprise entre 100°C et 150°C, de préférence entre 110°C et 140°C.

**13.** Pneu selon l'une quelconque des revendications 1 à 12, dans lequel le composé thermofusible est l'urée ou un dérivé thermofusible de l'urée.

**14.** Pneu selon l'une quelconque des revendications 1 à 13, dans lequel la densité de la composition de caoutchouc thermo-expansible est comprise entre 1,100 et 1,400 $g/cm^3$, de préférence dans un domaine de 1,150 à 1,350 $g/cm^3$.

**15.** Pneu à l'état vulcanisé, obtenu après cuisson d'un pneu selon l'une quelconque des revendications 1 à 14.

**Patentansprüche**

**1.** Reifen, dessen Lauffläche im nicht vulkanisierten Zustand eine wärmeexpandierbare Kautschukzusammensetzung aufweist, aufweisend mindestens:

- 50 bis 100 phr eines Copolymers auf der Basis von Styrol und von Butadien;
- optional 0 bis 50 phr eines anderen Dienelastomers;
- über 50 phr eines verstärkenden Füllstoffs;
- zwischen 5 und 25 phr eines Expansionsmittels;
- zwischen 5 und 25 phr einer thermisch schmelzbaren Verbindung, deren Schmelztemperatur zwischen 70°C und 150°C liegt;
- wobei der Gehalt insgesamt an Expansionsmittel und thermisch schmelzbarer Verbindung über 15 phr beträgt.

**2.** Reifen nach Anspruch 1, wobei das Copolymer, das auf der Basis von Styrol und von Butadien aus der Gruppe ausgewählt ist, die von den Styrol-Butadien-Copolymeren, den Styrol-Butadien-Isopren-Copolymeren und den Gemischen derartiger Copolymere gebildet ist, vorzugsweise ein Styrol-Butadien-Copolymer ist.

**3.** Reifen nach einem der Ansprüche 1 bis 2, wobei das Copolymer auf der Basis von Styrol und von Butadien eine Glasübergangstemperatur aufweist, die über -40°C, vorzugsweise in einem Bereich von -30°C bis +30°C, liegt.

4. Reifen nach einem der Ansprüche 1 bis 3, wobei das andere Dienelastomer aus der Gruppe ausgewählt ist, die von dem natürlichen Kautschuk, den Synthese-Polyisoprenen, den Polybutadienen, den Butadien-Copolymeren, den Isopren-Copolymeren und den Gemischen dieser Elastomere gebildet ist.

5. Reifen nach einem der Ansprüche 1 bis 4, wobei der Gehalt an verstärkendem Füllstoff zwischen 50 und 150 phr, vorzugsweise in einem Bereich von 70 bis 120 phr, liegt.

6. Reifen nach einem der Ansprüche 1 bis 5, wobei die Kautschukzusammensetzung ferner einen bei 20°C flüssigen Weichmacher in einem Gehalt derart aufweist, dass das Gewichtsverhältnis verstärkender Füllstoff zu flüssigem Weichmacher höher als 2,0, vorzugsweise höher als 2,5, ist.

7. Reifen nach einem der Ansprüche 1 bis 6, wobei das Expansionsmittel aus der Gruppe ausgewählt ist, die von den Azo-, Nitroso-, Hydrazin-, Carbazid-, Semicarbazid-, Tetrazol-, Carbonat-, Citratverbindungen und den Gemischen derartiger Verbindungen gebildet ist, vorzugsweise aus der Gruppe, die von den Diazo-, Dinitroso-, Sulfonylsemicarbazid-, Sulfonylhydrazidverbindungen und den Gemischen derartiger Verbindungen gebildet ist.

8. Reifen nach Anspruch 7, wobei das Expansionsmittel eine Azodicarbonamidverbindung ist.

9. Reifen nach einem der Ansprüche 1 bis 8, wobei der Expansionsmittelgehalt zwischen 8 und 20 phr liegt.

10. Reifen nach einem der Ansprüche 1 bis 9, wobei der Gehalt an thermisch schmelzbarer Verbindung zwischen 8 und 20 phr liegt.

11. Reifen nach einem der Ansprüche 1 bis 10, wobei die Gesamtmenge an Expansionsmittel und an thermisch schmelzbarer Verbindung über 20 phr, vorzugsweise zwischen 20 und 40 phr, liegt.

12. Reifen nach einem der Ansprüche 1 bis 11, wobei die Schmelztemperatur der thermisch schmelzbaren Verbindung zwischen 100°C und 150°C, vorzugsweise zwischen 110°C und 140°C, liegt.

13. Reifen nach einem der Ansprüche 1 bis 12, wobei die thermisch schmelzbare Verbindung Harnstoff oder ein thermisch schmelzbares Derivat von Harnstoff ist.

14. Reifen nach einem der Ansprüche 1 bis 13, wobei die Dichte der wärmeexpandierbaren Kautschukzusammensetzung zwischen 1,100 und 1,400 g/cm$^3$, vorzugsweise in einem Bereich von 1,150 bis 1,350 g/cm$^3$, liegt

15. Reifen in vulkanisiertem Zustand, erhalten nach dem Härten eines Reifens nach einem der Ansprüche 1 bis 14.

**Claims**

1. A tire whose tread comprises, in the unvulcanized state, a heat-expandable rubber composition comprising at least:

- 50 to 100 phr of a copolymer based on styrene and butadiene;
- optionally, 0 to 50 phr of another diene elastomer;
- more than 50 phr of a reinforcing filler;
- between 5 and 25 phr of a blowing agent;
- between 5 and 25 phr of a heat-fusible compound with a melting point between 70°C and 150°C;
- the total content of blowing agent and heat-fusible compound being greater than 15 phr.

2. The tire as claimed in claim 1, wherein the copolymer based on styrene and butadiene is selected from the group consisting of styrene/butadiene copolymers, styrene/butadiene/isoprene copolymers and mixtures of such copolymers, preferably is a styrene/butadiene copolymer.

3. The tire as claimed in any one of claims 1 to 2, wherein the copolymer based on styrene and butadiene has a glass transition temperature that is greater than -40°C, preferably in the range from -30°C to +30°C.

4. The tire as claimed in any of claims 1 to 3, wherein the other diene elastomer is selected from the group consisting of natural rubber, synthetic polyisoprenes, polybutadienes, butadiene copolymers, isoprene copolymers and mixtures of these elastomers.

5. The tire as claimed in any one of claims 1 to 4, wherein the reinforcing filler ratio is between 50 and 150 phr, preferably in the range of 70 to 120 phr.

6. The tire as claimed in any one of claims 1 to 5, wherein the rubber composition further comprises a plasticizing agent that is liquid at 20°C, at a rate such that the weight ratio of reinforcing filler to liquid plasticizing agent is greater than 2.0, preferably greater than 2.5.

7. The tire as claimed in any one of claims 1 to 6, wherein the blowing agent is selected from the group consisting of azo, nitroso, hydrazines, carbazides, semicarbazides, tetrazoles, carbonates, citrates and mixtures of such compounds, preferably from the group consisting of diazo, dinitroso, sulfonyl semicarbazides, sulfonyl hydrazides and mixtures of such compounds.

8. The tire as claimed in claim 7, wherein the blowing agent is an azodicarbonamide compound.

9. The tire as claimed in any one of claims 1 to 8, wherein the blowing agent is present at a content of between 8 and 20 phr.

10. The tire as claimed in any one of claims 1 to 9, wherein the heat-fusible compound is present at a content of between 8 to 20 phr.

11. The tire as claimed in any one of claims 1 to 10, wherein the total amount of blowing agent and heat-fusible compound is more than 20 phr, preferably between 20 and 40 phr.

12. The tire as claimed in any one of claims 1 to 11, wherein the melting point of the heat-fusible compound is between 100°C and 150°C, preferably between 110°C and 140°C.

13. The tire as claimed in any one of claims 1 to 12, wherein the heat-fusible compound is urea or a heat-fusible derivative of urea.

14. The tire as claimed in any one of claims 1 to 13, wherein the density of the heat-expandable rubber composition is between 1.100 and 1.400 $g/cm^3$, preferably in the range of 1.150 to 1.350 $g/cm^3$.

15. A tire in the vulcanized state, obtained after curing a tire as claimed in any one of claims 1 to 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2010069510 A
- EP 2039531 A
- US 20100132861 A
- US 20030119927 A
- FR 2952645
- WO 9736724 A
- WO 9916600 A
- WO 2006069792 A
- WO 2006069793 A
- WO 2008003434 A
- WO 2008003435 A
- WO 03002648 A
- US 2005016651 A
- WO 3002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 02088238 A
- WO 2005087859 A
- WO 2006061064 A
- WO 2007017060 A
- WO 0210269 A
- US 7199175 B